# EUROPÄISCHE PATENTSCHRIFT

(11) **EP 0 786 744 B1**
(45) Veröffentlichungstag und Bekanntmachung des Hinweises auf die Patenterteilung: **04.06.2003**
(21) Anmeldenummer: 96120333.8
(22) Anmeldetag: 18.12.1996
(51) Int. Cl.: G07C 5/08, G01P 21/02

(54) **Vorrichtung für einen Fahrtschreiber zum Prüfen der korrekten Funktion eines mit dem Fahrtschreiber verbundenen Instruments zur Anzeige der Fahrzeuggeschwindigkeit und/oder einer mit dem Fahrtschreiber verbundenen Vorrichtung zur automatischen Begrenzung der Fahrzeuggeschwindigkeit**
Device for a tachograph for checking the correct working of an instrument connected to the tachograph for displaying the vehicle speed and/or device connected to the tachograph for limiting automatically the vehicle speed
Dispositif pour un tachygraphe pour contrôler l'opération correcte d'un instrument connecté au tachygraphe pour l'affichage de la vitesse du véhicule et/ou dispositif connecté au tachygraphe pour limiter automatiquement la vitesse du véhicule

(30) Priorität: 27.01.1996 DE 19602999
(43) Veröffentlichungstag der Anmeldung: 30.07.1997
(73) Patentinhaber: SIEMENS AKTIENGESELLSCHAFT, 80333 München (DE)
(72) Erfinder: Rombach, Gerhard, Dipl.-Ing., 78136 Schonach (DE)

(56) Entgegenhaltungen:
- EP-A- 0 362 969
- FR-A- 2 535 875
- GB-A- 2 096 327
- US-A- 5 018 087
- US-A- 5 225 768

## Beschreibung

Die Erfindung betrifft eine Vorrichtung für einen Fahrtschreiber zum Prüfen der korrekten Funktion eines mit dem Fahrtschreiber verbundenen Instruments zur Anzeige der Fahrzeuggeschwindigkeit und/oder einer mit dem Fahrtschreiber verbundenen Vorrichtung zur automatischen Begrenzung der Fahrzeuggeschwindigkeit nach dem Oberbegriff des ersten Anspruchs.

In Kraftfahrzeugen, die der Ausrüstungspflicht mit einem Fahrtschreiber unterliegen, müssen aufgrund gesetzlicher Vorschriften Instrumente zur Anzeige der Fahrzeuggeschwindigkeit sowie Vorrichtungen zur automatischen Begrenzung der Fahrzeuggeschwindigkeit durch Kontrollbehörden vor Ort am Fahrzeug auf korrekte Funktion überprüfbar sein. Dazu werden herkömmlicherweise mit einem speziellen Testgerät in definierter Weise Geschwindigkeitsimpulse in den Fahrtschreiber über dessen Diagnosebuchse eingekoppelt (GB2 096 327 A), wobei diese Geschwindigkeitsimpulse über verplombte Ausgangsleitungen des Fahrtschreibers als Prüfwert an das Instrument zur Anzeige der Fahrzeuggeschwindigkeit oder an eine Vorrichtung zur automatischen Begrenzung der Fahrzeuggeschwindigkeit abgegeben werden. Die Ausgangsleitungen des Fahrtschreibers können dabei auch als CAN-Bus ausgebildet sein. Anhand der Reaktion des Prüflings auf die Beaufschlagung mit dem Prüfwert gelangt man dann zu einer Aussage über die Qualität von dessen Betriebsverhalten.

Die Diagnosebuchse des Fahrtschreibers ist bisher unverplombt ausgeführt worden. Die Erfahrung hat jedoch gezeigt, daß diese ungeschützte Kommunikationsschnittstelle zum Fahrtschreiber auch von unberechtigten Personen für unzulässige Einflußnahmen auf den Fahrtschreiber mißbraucht werden kann. Deshalb wurde die Forderung erhoben, die Diagnosebuchse zu verplomben, was jedoch den Nachteil hat, daß die Plombe nach jeder Geschwindigkeitskontrolle erneuert werden muß, was bedeutet, daß die Kontrollbehörden Werkzeug zum Zerstören der alten Plombe und die erforderliche Ausrüstung zum Setzen einer neuen Plombe mitführen müssen.

Es ist nun die Aufgabe der vorliegenden Erfindung, für einen Fahrtschreiber eine Vorrichtung zu schaffen, mit der eine Prüfung der korrekten Funktion eines mit dem Fahrtschreiber verbundenen Instruments zur Anzeige der Fahrzeuggeschwindigkeit und/oder einer mit dem Fahrtschreiber verbundenen Vorrichtung zur automatischen Begrenzung der Fahrzeuggeschwindigkeit auf einfache Weise möglich ist und die für Manipulationen am Fahrtschreiber nicht mißbraucht werden kann.

Die Aufgabe wird durch die Merkmale des ersten Anspruchs gelöst. Die abhängigen Ansprüche zeigen vorteilhafte Ausgestaltungen und Weiterbildungen der gefundenen Lösung.

Die vorgeschlagene Lösung ermöglicht es den Kontrollbehörden, an einem in einem Fahrzeug im Betrieb befindlichen Fahrtschreiber auf eine gegenüber dem Stand der Technik vereinfachte Weise zu prüfen, ob das Instrument zur Anzeige der Fahrzeuggeschwindigkeit sowie ob eine Vorrichtung zur automatischen Begrenzung der Fahrzeuggeschwindigkeit korrekt funktionieren. Mit dieser Prüfung wird die Voraussetzung geschaffen für eine zuverlässige Feststellung, ob der Fahrer des Fahrzeugs die für die zurückgelegte Wegstrecke höchst zulässige Fahrgeschwindigkeit eingehalten hat. Die gefundene Lösung hat den besonderen Vorteil, daß die Kontrollbehörden für den Prüfvorgang kein spezielles Prüfgerät oder Werkzeug mitzuführen brauchen. Auch werden durch den Prüfvorgang keine Plombierungen betroffen. Ein Schutz vor Manipulationen am Fahrtschreiber ergibt sich dadurch, daß eine Schnittstelle am Fahrtschreiber zum Einführen eines Prüfsignals, sofern sie überhaupt noch vorgesehen wird, verplombt bleiben kann.

Anhand eines Ausführungsbeispiels soll die gefundene Lösung nun näher erläutert werden. Erfindungsgemäß wird der Fahrtschreiber mit einer Baugruppe zur Erzeugung von Geschwindigkeitsimpulsen ausgestattet. Dieser Impulsgenerator ist durch Bedienelemente des Fahrtschreibers aktivierbar und steuerbar. Ein spezieller Tastendruck, vorzugsweise das gleichzeitige Betätigen mehrerer Tasten, versetzt den Fahrtschreiber in einen Testmode.

Es ist aus Gründen der Manipulationssicherheit sehr zu empfehlen, die Durchführbarkeit der Geschwindigkeitssimulation durch den Impulsgenerator des Fahrtschreibers an bestimmte Randbedingungen zu knüpfen. Sinnvolle Randbedingungen bestehen in einer beim Aufruf des Testmode vom Fahrtschreiber veranlaßten Prüfung, ob sich das Fahrzeug gegenwärtig im Stillstand befindet und wieviele Geschwindigkeitssimulationen bereits zuvor in einem festgelegten Zeitraum durchgeführt wurden. In der Praxis kann man die Anzahl der Geschwindigkeitssimulationen zB auf fünf pro Tag begrenzen, weil es der allgemeinen Erfahrung widerspricht, daß ein und dasselbe Fahrzeug an einem Tag häufiger in eine Geschwindigkeitskontrolle gerät. Auch sollte die Dauer der einzelnen Geschwindigkeitssimulationen zB auf jeweils 15 Minuten begrenzt werden. Die beiden zuletzt genannten Restriktionen bedingen, daß in einem nicht-flüchtigen Speicher des Fahrtschreibers das Datum und die Uhrzeit der Geschwindigkeitssimulationen bzw. zumindest der letzten Geschwindigkeitssimulation registriert und die Anzahl der in einer festgelegten Zeiteinheit vorangegangenen Geschwindigkeitssimulationen gezählt werden. Zur zeitlichen Begrenzung der Dauer einer Geschwindigkeitssimulation ist ein Timer in Gang zu setzen, der den Testmode für die Geschwindigkeitssimulation beim Erreichen der dafür festgesetzten zulässigen Dauer abschaltet.

Um einem Mißbrauch der Geschwindigkeitssimulationsvorrichtung vorzubeugen, ist ferner gerätetechnisch im Fahrtschreiber auch sicherzustellen, daß der Impulsgenerator ausschließlich auf die zu überprüfenden Baugruppen zugreifen kann. Eine Registrierung der simulierten Geschwindigkeitsimpulse auf der Diagrammscheibe, einer Chipkarte oder in einem sonstigen Speicher sollte nicht erfolgen.

Beim Aufruf des Testmode prüft der Fahrtschreiber mittels seiner durch einen Mikroprozessor ausgebildeten Steuereinheit, ob zB alle zuvor genannten zur Durchführung einer Geschwindigkeitssimulation festgelegten Randbedingungen erfüllt sind. Wenn eine Restriktion nicht erfüllt ist, wird dem Bediener vorzugsweise an einer Anzeige des Fahrtschreibers angezeigt, daß der Aufruf des Testmode (derzeit) nicht ausführbar ist. Diese Meldung kann kodiert oder explizit den Grund des Scheiterns beinhalten.

Falls der Impulsgenerator so ausgestaltet ist, daß er mehrere, unterschiedliche Geschwindigkeiten darstellende Impulsfolgen erzeugen kann, wird durch eine weitere Betätigung von mindestens einem Bedienelement des Fahrtschreibers die Selektion der gewünschten Geschwindigkeit ermöglicht. Durch eine Tastenbetätigung selektierbare Vorgabeeinstellungen können Simulationen der Geschwindigkeiten von zB 60 km/h, 80 km/h und 100 km/h sein. Die ausgewählte Geschwindigkeit wird als Rückmeldung an den Bediener an einer Anzeige des Fahrtschreibers angezeigt.

Es ist vorteilhaft, den Impulsgenerator nicht nur zur Generierung von festen Impulswerten auszubilden, sondern auch Feineinstellungen zu ermöglichen. Über ein Bedienelement des Fahrtschreibers können dadurch im zulässigen Geschwindigkeitsbereich des Fahrtschreibers in Schritten von zB 1 km/h Änderungen an den Vorgabewerten erfolgen und genaue bedarfsgerechte Einstellungen vorgenommen werden. Eine Anzeige, auf der der genaue Geschwindigkeitsbetrag numerisch anzeigbar ist, erweist sich hier als besonders vorteilhaft.

Der Testmode des Fahrtschreibers ist entweder jederzeit manuell durch die Betätigung von mindestens einem Bedienelement des Fahrtschreibers oder automatisch spätestens nach Ablauf der für eine Geschwindigkeitssimulation voreingestellten zulässigen Zeit durch eine Deaktivierung des Impulsgenerators beendbar. Auch ein Anfahren des Fahrzeugs kann den Testmode beenden.

Bei Fahrtschreibern, die für die Kommunikation mit einer Chipkarte ausgelegt sind, kann der Aufruf des Testmode und die Steuerung der Prüfung eines mit dem Fahrtschreibers verbundenen Prüflings durch eine spezielle in den Fahrtschreiber einführbare Chipkarte erfolgen. Diese Chipkarte kann eine eigens für den Zweck der Prüfung an die Kontrollbehörden ausgegebene Chipkarte sein, die die Berechtigung zur Durchführung der Prüfung nachweist sowie alle zur Ausführung der Prüfung erforderlichen Schritte optional oder alternativ zur manuellen Bedienung des Fahrtschreibers veranlaßt.

## Patentansprüche

1. Vorrichtung für einen Fahrtschreiber zum Prüfen der korrekten Funktion eines mit dem Fahrtschreiber verbundenen Instruments zur Anzeige der Fahrzeuggeschwindigkeit und/oder einer mit dem Fahrtschreiber verbundenen Vorrichtung zur automatischen Begrenzung der Fahrzeuggeschwindigkeit, wobei der Fahrtschreiber über mindestens ein Bedienelement verfügt, **dadurch gekennzeichnet,**
**daß** der Fahrtschreiber mit einem Impulsgenerator ausgestattet ist, der durch eine Betätigung von dem mindestens einen Bedienelement aktivierbar ist, der Impulsfolgen eines Geschwindigkeitssignals simuliert und diese Impulsfolgen des Geschwindigkeitssignals über Ausgangsleitungen des Fahrtschreibers als Prüfwert an das Instrument zur Anzeige der Fahrzeuggeschwindigkeit und/oder an eine Vorrichtung zur automatischen Begrenzung der Fahrzeuggeschwindigkeit abgibt.

2. Vorrichtung nach Anspruch 1, **dadurch gekennzeichnet, daß** der Fahrtschreiber über einen nicht-flüchtigen Speicher verfügt, der das Datum und die Uhrzeit zumindest der letzten Geschwindigkeitssimulation registriert und/oder der die Anzahl der in einer festgelegten Zeiteinheit vorangegangenen Geschwindigkeitssimulationen zählt.

3. Vorrichtung nach einem der vorangegangenen Ansprüche, **dadurch gekennzeichnet, daß** der Fahrtschreiber über einen Timer verfügt, der die Dauer der Geschwindigkeitssimulation erfaßt.

4. Vorrichtung nach einem der vorangegangenen Ansprüche, **dadurch gekennzeichnet, daß** im Fahrtschreiber Mittel vorgesehen sind, die sicherzustellen, daß der Impulsgenerator ausschließlich auf die zu überprüfenden Baugruppen zugreifen kann.

5. Vorrichtung nach einem der vorangegangenen Ansprüche, **dadurch gekennzeichnet, daß** im Fahrtschreiber Mittel vorgesehen sind, die eine Registrierung der simulierten Geschwindigkeitsimpulse auf einer Diagrammscheibe, einer Chipkarte oder in einem sonstigen Speicher ausschließen.

6. Vorrichtung nach einem der vorangegangenen Ansprüche, **dadurch gekennzeichnet, daß** der Impulsgenerator so ausgestaltet ist, daß er mehrere, unterschiedliche Geschwindigkeiten darstellende Impulsfolgen erzeugen kann, die durch eine Betätigung des mindestens einen Bedienelements des Fahrtschreibers selektierbar sind.

7. Vorrichtung nach einem der vorangegangenen Ansprüche, **dadurch gekennzeichnet, daß** über das mindestens eine Bedienelement des Fahrtschreibers im zulässigen Geschwindigkeitsbereich des Fahrtschreibers schrittweise Änderungen an den durch eine Voreinstellung festgelegten Geschwindigkeitswerten vornehmbar sind.

8. Vorrichtung nach einem der vorangegangenen Ansprüche, **dadurch gekennzeichnet, daß** der Fahrtschreiber mit einer Anzeige ausgestattet ist, die eine Information über die Durchführbarkeit, eine selektierte Einstellung und/oder das Ergebnis der Geschwindigkeitssimulation meldet.

9. Vorrichtung nach einem der vorangegangenen Ansprüche, **dadurch gekennzeichnet, daß** der Impulsgenerator des Fahrtschreibers jederzeit manuell durch die Betätigung des mindestens einen Bedienelements des Fahrtschreibers oder durch den Timer gesteuert beim Erreichen einer für die Geschwindigkeitssimulation festgesetzten zulässigen Höchstdauer deaktivierbar ist.

10. Vorrichtung nach einem der vorangegangenen Ansprüche, **dadurch gekennzeichnet, daß** der Impulsgenerator des Fahrtschreibers beim Anfahren des Fahrzeugs abschaltet.

11. Vorrichtung nach einem der vorangegangenen Ansprüche, **dadurch gekennzeichnet, daß** bei einem Fahrtschreiber, der für die Kommunikation mit einer Chipkarte ausgelegt ist, der Aufruf und die Steuerung der Prüfung durch eine in den Fahrtschreiber einführbare Chipkarte optional oder alternativ zur manuellen Bedienung des Fahrtschreibers veranlaßbar ist.

## Claims

1. Device for a tachograph for checking the correct functioning of an instrument connected, to the tachograph, for displaying the vehicle speed and/or of a device connected to the tachograph for automatically limiting the vehicle speed, the tachograph having at least one operator control, **characterized in that** the tachograph is equipped with a pulse generator which can be activated by actuating the at least one operator control, simulates pulse sequences of a speed signal and outputs said pulse sequences of the speed signal as a check value to the instrument for displaying the vehicle speed and/or to a device for automatically limiting the vehicle speed, via output lines of the tachograph.

2. Device according to Claim 1, **characterized in that** the tachograph has a non-volatile memory which registers the date and the time at least of the last speed simulation and/or counts the number of preceding speed simulations in a defined time unit.

3. Device according to one of the preceding claims, **characterized in that** the tachograph has a timer which records the duration of the speed simulation.

4. Device according to one of the preceding claims, **characterized in that** means which ensure that the pulse generator can only access the assemblies to be checked are provided in the tachograph.

5. Device according to one of the preceding claims, **characterized in that** means which prevent the simulated speed pulses being registered on a diagram disk, a chip card or in some other memory are provided in the tachograph.

6. Device according to one of the preceding claims, **characterized in that** the pulse generator is configured in such a way that it can generate a plurality of pulse sequences which represent different speeds and which can be selected by actuating the at least one operator control of the tachograph.

7. Device according to one of the preceding claims, **characterized in that** the speed values which are defined by presetting can be changed incrementally by means of the at least one operator control of the tachograph in the permitted speed range of the tachograph.

8. Device according to one of the preceding claims, **characterized in that** the tachograph is equipped with a display which signals information about the possibility of execution, a selected setting and/or the result of the speed simulation.

9. Device according to one of the preceding claims, **characterized in that** the pulse generator of the tachograph can be deactivated manually at any time by actuating at least one operator control of the tachograph or under the control of the timer when a maximum permitted duration which is defined for the speed simulation is reached.

10. Device according to one of the preceding claims, **characterized in that** the pulse generator of the tachograph switches off when the vehicle is started up.

11. Device according to one of the preceding claims, **characterized in that** in a tachograph which is configured for communication with a chip card, the calling and the control of the check can be brought about by a chip card which can be introduced into the tachograph, as an option or as an alternative to manual operation of the tachograph.

## Revendications

1. Dispositif pour un tachygraphe pour le contrôle du fonctionnement correct d'un indicateur de vitesse d'un véhicule relié au tachygraphe et/ou d'un dispositif de limitation automatique de vitesse d'un véhicule relié au tachygraphe, le tachygraphe disposant au moins d'un élément de réglage,
**caractérisé en ce que**
le tachygraphe est équipé d'un générateur d'impulsions qui peut être activé par actionnement d'au moins un élément de réglage, qui simule des séries d'impulsions d'un signal de vitesse et délivre ces séries d'impulsions du signal de vitesse par des conducteurs de sortie du tachygraphe comme valeur de contrôle à l'indicateur de vitesse du véhicule et/ou à un dispositif de limitation automatique de vitesse du véhicule.

2. Dispositif selon la revendication 1, **caractérisé en ce que** le tachygraphe dispose d'une mémoire rémanente qui enregistre la date et l'heure au moins de la dernière simulation de vitesse et/ou compte le nombre des simulations de vitesse effectuées dans une unité de temps déterminée.

3. Dispositif selon l'une des revendications précédentes, **caractérisé en ce que** le tachygraphe dispose d'une horloge qui saisit la durée de la simulation de vitesse.

4. Dispositif selon l'une des revendications précédentes, **caractérisé en ce que** des moyens sont prévus dans le tachygraphe qui assurent que le générateur d'impulsions ne peut accéder exclusivement qu'aux blocs à contrôler.

5. Dispositif selon l'une des revendications précédentes, **caractérisé en ce que** des moyens sont prévus dans le tachygraphe qui excluent un enregistrement des impulsions de vitesse simulées sur un disque de diagramme, une carte à puce ou dans une mémoire accessoire.

6. Dispositif selon l'une des revendications précédentes, **caractérisé en ce que** le générateur d'impulsions est conçu de manière à pouvoir produire plusieurs séries d'impulsions représentant des vitesses différentes, qui peuvent être sélectionnées par actionnement de l'au moins un élément de réglage du tachygraphe.

7. Dispositif selon l'une des revendications précédentes, **caractérisé en ce que** des modifications pas à pas peuvent être apportées, par l'intermédiaire de l'au moins un élément de réglage du tachygraphe, dans le domaine de vitesse admissible aux valeurs de vitesse déterminées par un préréglage.

8. Dispositif selon l'une des revendications précédentes, **caractérisé en ce que** le tachygraphe est équipé d'un dispositif d'affichage qui transmet une information sur la possibilité d'exécution, un réglage sélectionné et/ou le résultat de la simulation de vitesse.

9. Dispositif selon l'une des revendications précédentes, **caractérisé en ce que** le générateur d'impulsions du tachygraphe peut toujours être désactivé manuellement par l'actionnement de l'au moins un élément de réglage du tachygraphe ou commandé par l'horloge lorsqu'une durée maximale admissible déterminée pour la simulation de vitesse est atteinte.

10. Dispositif selon l'une des revendications précédentes, **caractérisé en ce que** le générateur d'impulsions du tachygraphe est mis hors service lors de la mise en marche du véhicule.

11. Dispositif selon l'une des revendications précédentes, **caractérisé en ce que**, dans un tachygraphe équipé d'une carte à puce pour la communication, l'appel et la commande du contrôle peuvent être provoqués en option ou alternativement pour l'utilisation manuelle du tachygraphe par une carte à puce enfichable dans le tachygraphe.
